# EUROPÄISCHE PATENTSCHRIFT

(11) **EP 3 728 083 B1**
(45) Veröffentlichungstag und Bekanntmachung des Hinweises auf die Patenterteilung: **11.08.2021**
(21) Anmeldenummer: 18812055.4
(22) Anmeldetag: 25.10.2018
(51) Int. Cl.: B65G 21/14, B65G 15/24, B65G 15/26

(54) **TELESKOPFÖRDERER**
TELESKPIC CONVEYOR
CONVOYEUR TÉLESCOPIQUE

(30) Priorität: 21.12.2017 DE 102017011880
(43) Veröffentlichungstag der Anmeldung: 28.10.2020
(73) Patentinhaber: Gawronski GmbH, 73765 Neuhausen (DE)
(72) Erfinder: SACHS, Alexander, 67346 Speyer (DE)
(74) Vertreter: Spachmann, Holger
(86) Internationale Anmeldenummer: PCT/EP2018/000489
(87) Internationale Veröffentlichungsnummer: WO 2019/120597

(56) Entgegenhaltungen:
- EP-A1- 1 908 711
- EP-A2- 2 243 728
- FR-A- 1 267 843
- US-A- 3 332 819

## Beschreibung

Die Erfindung betrifft einen Teleskopförderer mit zwei oder mehr übereinander angeordneten und in Längsrichtung in Bezug zueinander relativ bewegbaren Bandförderern und mit einer Überbrückungsvorrichtung, die die an dem Übergabeende zu überwindende Höhendifferenz zwischen zwei übereinander angeordneten Bandförderern überbrückt.

Aus dem Stand der Technik sind Teleskopfördereinrichtungen bekannt, die aus zwei oder mehr Förderbändern, hierin auch gleichbedeutend als Bandförderer bezeichnet, bestehen, die in Längsrichtung in Bezug zueinander verfahrbar sind, um so eine Förderstrecke durch Auseinanderfahren entlang ihrer Länge bis zu einer Maximallänge anpassen zu können und/oder die Fördereinrichtung bei Nichtgebrauch platzsparend zusammenfahren zu können.

Da die teleskopierbaren Förderbänder oder Bandförderer bzw. die Förderbandabschnitte bzw. Bandfördererabschnitte übereinander angeordnet sind, kommen die Enden etagenartig übereinander zu liegen, sodass das Fördergut nur in einer Richtung, nämlich vom oberen Bandförderer auf den unteren, transportiert werden kann, wenn apparativ keine Hilfsvorrichtung vorgesehen ist. Eine Umkehrung der Förderrichtung ist nicht ohne weiteres zu bewerkstelligen, da das Fördergut, insbesondere wenn es sich dabei um kleine Artikel handelt, diese Stufe bzw. Stoßkante nicht überwinden kann.

Um diese Problemstellung zu lösen, beschreibt DE 10 2009 018 163 B4 eine separate Überbrückungsvorrichtung für teleskopierbare Förderbänder, bei denen die Enden benachbarter Förderbänder im teleskopierten Zustand etagenartig übereinander liegen. Die separate Überbrückungsvorrichtung weist ein Gestell auf, das bedarfsweise im Bereich des etagenartigen Übergangs von einem Förderband zum benachbarten Förderband angebracht wird und wenigstens eine, in Transportrichtung gesehen querverlaufende, drehbare Rolle aufweist, die die zu überwindende Gesamthöhe in wenigstens eine zu überwindende Teilhöhe unterteilt.

Alternativ dazu gibt es Teleskopförderer, bei denen ein Abschnitt des Umlaufbands an dem Übergabeende, das die Stoßkante bildet, über dem unteren Förderband liegt, um eine tiefer platzierte Umlenkrolle mit kleinerem Durchmesser umgelenkt wird. Auch mit diesem nach unten abgeknickten Endabschnitt wird die zu überwindende Höhendifferenz zwischen übereinander benachbarten Förderbändern verkleinert.

Wenngleich in beiden Fällen ein Transport von einem unteren Förderband bzw. Bandförderer auf ein oberes Förderband bzw. einen Bandförderer ermöglicht wird, besteht doch weiterhin Verbesserungsbedarf, da auch diese Überbrückungsvorrichtungen noch Stoßkanten haben, die nicht nur für kleines Fördergut, sondern auch für Fördergut mit runder Ausformung oder elastischen Materialeigenschaften Hindernisse darstellen. Während zu kleine Förderartikel auch die mit der Rolle bereitgestellte Teilhöhe bzw. die Höhendifferenz bis zum abgeknickten Endabschnitt nicht überwinden können, kann die Stoßkante bei runden und/oder elastischen Artikeln dazu führen, dass diese Artikel weggeschoben werden oder wegspringen; bei scharfkantigen oder kleinen und flachen Gegenständen kann es sogar zum Verklemmen kommen.

Ausgehend von diesem Stand der Technik ist es Aufgabe der vorliegenden Erfindung, einen Teleskopförderer ohne Stoßkante zwischen direkt übereinander liegenden und folglich benachbarten Bandförderern bereitzustellen, mit dem Fördergut in beide Richtungen störungsfrei transportiert werden kann.

Diese Aufgabe wird durch einen Teleskopförderer mit den Merkmalen des Anspruchs 1 gelöst.

Bevorzugte Ausführungsformen sind in den Unteransprüchen ausgeführt.

Ein erfindungsgemäßer Teleskopförderer umfasst gemäß einer ersten Ausführungsform zumindest zwei Bandförderer, die übereinander angeordnet und in Längsrichtung in Bezug zueinander relativ bewegbar sind. Ein solcher Bandförderer umfasst einen Rahmen und ein Umlaufband, das an endständigen Umlenkrollen umgelenkt wird. Eine dieser Umlenkrollen liegt an dem einen Ende ("erstes Ende") jedes Bandförderers vor, das - außer beim obersten Bandförderer - unter dem darüber angeordneten Bandförderer zu liegen kommt, und die zweite Umlenkrolle liegt an dem zweiten Ende vor, das als Übergabeende jedes Bandförderers definiert wird, das - außer beim untersten Bandförderer - auf einem darunter angeordneten Bandförderer endet. Am Übergabeende wird das Fördergut zwischen übereinander liegenden und unmittelbar benachbarten Bandförderern übergeben. Um die Übergabe zu gestalten, ist eine Überbrückungsvorrichtung jeweils zwischen zwei benachbarten Bandförderern vorgesehen. Diese dient dazu, die zu überwindende Höhendifferenz zwischen den beiden unmittelbar übereinander angeordneten Bandförderern zu überbrücken. Gemäß Stand der Technik ist diese Überbrückung bisher nur teilweise bzw. unvollständig möglich.

Erfindungsgemäß wird die Überbrückung perfektioniert und vervollständigt. Dies bedeutet: der Höhenunterschied bzw. die Lücke zwischen den beiden Bändern, zwischen denen Ware übergeben wird, wird so ideal klein und harmonisch gestaltet, dass die Ware nicht hängen bleibt oder durch eine Stufe an der Übergabestelle einen Impuls erhält, der sie vom Bandförderer springen lässt oder zumindest unerwünscht auf dem Bandförderer versetzt, der die Ware übernimmt.

Die Überbrückungsvorrichtung ist daher am jeweiligen Übergabeende eines Bandförderers zum Folgebandförderer vorgesehen. Die erfindungsgemäße Überbrückungsvorrichtung weist hierzu eine Rampe mit einer vorbestimmten (durch die zu überwindende Höhe vorgegebene) Steigung und eine erste Umlenkrolle auf, die an dem höher liegenden Ende der Rampe - das also an den darüber liegenden Bandförderer angrenzt - angeordnet ist. Weiter weist die Überbrückungsvorrichtung eine erste Niederhaltevorrichtung an einer Position unterhalb der ersten Umlenkrolle auf, und eine zweite Niederhaltevorrichtung am Fuß der Rampe. Das Umlaufband des jeweils unteren Bandförderers ist damit von einer Förderebene, auf der das Transportgut quasi bodenparallel gefördert wird, unter der zweiten Niederhaltevorrichtung am Fuß der Rampe über diese mit der Steigung geführt und verläuft von dort über die erste Umlenkrolle umgelenkt und unter der ersten Niederhaltevorrichtung hindurch zurück auf die vorgenannte Förderebene dieses Bandförderers. Vorteilhaft setzt sich die Steigung der Rampe stufenlos tangential entlang dem über seine zweite endständige Umlenkrolle geführten unmittelbar nächsthöheren - also über dem Bandförderer mit der eben beschriebenen ersten Förderebene liegenden - Bandförderer fort.

Wie der Fachmann weiß, sind Förderanlagen wie der erfindungsgemäße Teleskopförderer oft auch auf sogenannten Tischen - die Tischbeine stehen auf dem Werkhallenboden, der durchaus Unebenheiten im Millimeterbereich haben kann - angebracht. Durch die erfindungsgemäße Überbrückungsvorrichtung und Rampe werden solche Unebenheiten ausgeglichen. Auch beim Fördern auf ein Transportmittel sind Unebenheiten auszugleichen, was durch die erfindungsgemäße Vorrichtung ebenfalls vorteilhaft stufenlos gelingt. So ist am Übergabeende jedes Bandförderers durch die Überbrückungsvorrichtung ein stetiger und damit stufenloser Übergang für zu transportierende Ware sichergestellt - dies wird im Grunde dadurch erreicht, dass eine Tangentialebene der ersten Umlenkrolle, die an dem höher liegenden Ende der Rampe angeordnet ist, und vorzugsweise auch die Tangentialebene der entsprechenden zweiten Umlenkrolle des darüber liegenden Bandförderers, die im Grunde nicht zur Überbrückungsvorrichtung gehört, dieser aber mit zur Wirkung verhilft, mit der durch die Rampe gebildeten schiefen Ebene fluchtet.

Fuß der Rampe meint hierin den Übergang eines jeden Bandes aus seiner bodengleichen Förderebene in die Steigung der Rampe. Damit dort das Band nicht abhebt, muss es niedergehalten werden; ebenso an der Stelle, an der es am Ende der Steigung zurück in die Förderebene geführt werden kann: daher sind an diesen beiden Positionen Niederhaltevorrichtung vorgesehen.

Die erste Niederhaltevorrichtung, die unter und geeigneter Weiser vor (also vorteilhaft nicht unter der Rampe) der ersten Umlenkrolle des oben liegenden Endes der Rampe vorliegt, kann vorteilhaft eine Niederhalterolle sein, aber auch ein Niederhaltestift oder ein Niederhaltestab sind denkbar. Die zweite Niederhaltevorrichtung am Fuß der Rampe kann ein Niederhaltestift oder Niederhaltestab oder eine Leiste sein - um die Ware nicht zu stören, können auch beidseits an der Breite des Bandes einander gegenüberliegend zwei Niederhaltestifte, -stäbe oder Leistenabschnitte angebracht sein, deren Länge nur so gering ist, dass das Umlaufband zuverlässig niedergehalten und sicher über die Rampe geführt wird. Ein Paar dieser Elemente bildet dann die Niederhaltevorrichtung.

Zum Begriff "Bandförderer": Dieser hätte auch "Förderband" heißen können; gemeint ist hierin mit "ein Bandförderer" eine Vorrichtung, die einen Rahmen hat, der mindestens zwei seitliche Rahmenteile hat, etwa Profilelementen wie z. B. Profilschienen und ggfs. auch Nutensteine, die über die beidendigen Umlaufrollen und deren Haltevorrichtungen miteinander verbunden sind. Über die Umlaufrollen wird das Umlaufband geführt; das ist soweit dem Fachmann alles bekannt, auch in Bezug auf den Antrieb der Rollen.

Auch das Anordnen mehrerer Bandförderer übereinander derart, dass bspw. über einen Griff, der an einem untersten der Bandförderer eines Teleskopförderers vorliegt, beginnend mit diesem, der Teleskopförderer ausgezogen werden kann, sodass die relativ zueinander beweglichen Rahmen jedes Bandförderers schubladenartig herausgezogen werden können und dabei über die Nutensteine/Mitnehmer den nächstoberen Rahmen mitnehmen ("teleskopieren"), ist Stand der Technik. Es ist zu beachten, dass sogenannte Universalbänder beidenends bzw. in beide Richtungen ausgezogen werden können; es ist daher auch möglich, dass an einem zuoberst liegenden Förderer ein Griff zum Ausziehen vorliegt. Das Ausziehen kann auch motorisch statt händisch erfolgen, dann liegt statt des Griffs eine entsprechend angetriebene Auszugsvorrichtung vor. Derart über einen Antrieb ausfahrbare Teleskopförderer werden etwa eingesetzt, um den Bandförderer in ein Transportfahrzeug aus dem oder in das gefördert werden soll, zu fahren.

Die zweite endständige Umlenkrolle eines oberen Bandförderers eines Teleskopförderers ("oberes" in Bezug auf einen darunter liegenden benachbarten Bandförderer) ist konstruktiv ohnehin dem oberen Rahmen zugeordnet; an diesem kann dann auch die Überbrückungsvorrichtung eines unteren Bandförderers angeordnet und daran befestigt sein, sodass sie in Bezug auf den Rahmen des jeweils unteren Bandförderers längsbeweglich ist. Beim Herausfahren eines unteren Bandförderers verbleibt die Übergabevorrichtung mit dem darüber geführten Umlaufband des unteren Bandförderers am Übergabeende des benachbart darüber angeordneten Bandförderers.

Die Befestigung der Überbrückungsvorrichtung des unteren Bandförderers und der zweiten endständigen Umlenkrolle des darüber liegenden benachbarten oberen Bandförderers kann über zwei seitliche Rahmenelemente, bevorzugt sogar über jeweils ein mit jedem seitlichen Rahmenelement verbundenes Winkelelement gebildet werden.

Die Steigung und die Länge der Rampe sowie die Positionierung der Umlenkrollen sind an die zu überwindende Höhendifferenz zwischen den übereinander benachbarten Bandförderern angepasst. Durch geeignete Wahl der Steigung kann die Überbrückungsvorrichtung an unterschiedliche vorgesehene Fördergeschwindigkeit optimal angepasst gefertigt werden.

Eine Ausführungsform sieht ferner vor, dass die Steigung der Rampe und Position der Rollen zur Anpassung variiert werden können. Dazu können etwa die Überbrückungsvorrichtung des unteren Bandförderers und die zweite endständigen Umlenkrolle des darüber liegenden benachbarten oberen Bandförderers drehgelenkig miteinander verbunden sein, das Drehgelenk verbindet die zwei seitlichen Rahmenelemente mit den angrenzenden Winkelelementen, so dass die Rampe derart beweglich ist, dass dabei Unebenheiten, vorwiegend im Millimeterbereich, ausgeglichen werden können.

Die durch die Rampe bereitgestellte schiefe Ebene kann durch eine Platte oder mehrere stetig ansteigend angeordnete Querrollen gebildet werden.

Weitere Ausführungsformen sowie einige der Vorteile, die mit diesen und weiteren Ausführungsformen verbunden sind, werden durch die nachfolgende ausführliche Beschreibung unter Bezug auf die begleitenden Figuren deutlich und besser verständlich. Gegenstände oder Teile derselben, die im Wesentlichen gleich oder ähnlich sind, können mit denselben Bezugszeichen versehen sein. Die Figuren sind lediglich eine schematische Darstellung einer Ausführungsform der Erfindung.

Dabei zeigen:
- **Fig. 1**: eine Seitenansicht eines Teleskopförderers aus dem Stand der Technik,
- **Fig. 2**: eine Seitenansicht eines erfindungsgemäßen Teleskopförderers,
- **Fig. 3**: eine Schnittansicht durch den erfindungsgemäßen Teleskopförderer aus Fig. 2,
- **Fig. 4**: **Fig. 4a** eine perspektivische Ansicht auf den erfindungsgemäßen Teleskopförderer aus Fig. 2 und **Fig. 4b** die perspektivische Ansicht aus Fig. 4a, mit Ebenen,
- **Fig. 5**: eine vergrößerte perspektivische Teilansicht des erfindungsgemäßen Teleskopförderers aus Fig. 4 mit Teileinblicken auf die Führung des Förderbands,
- **Fig. 6**: eine Schnittansicht durch einen Teil eines erfindungsgemäßen Teleskopförderers nach einer alternativen Ausführungsform,
- **Fig. 7**: eine Schnittansicht entsprechend Fig. 6 in einem teilweise teleskopierten Zustand,
- **Fig. 8**: schematische Seitenansichten der Umlaufbänder eines erfindungsgemäßen Teleskopförderers in a) zusammengeschobenen Zustand und b-d) zunehmend telekopierten Zustand
- **Fig. 9**: eine Detailansicht D aus Fig. 5 des Übergangsbereichs zwischen benachbarten Bandförderern,
- **Fig. 10**: **Fig. 10a** eine perspektivische Ansicht einer Überbrückungsvorrichtung und **Fig. 10b** die Variante dieser Überbrückung mit drehgelenkiger Anordnung.

Die erfindungsgemäße Vorrichtung bezieht sich auf einen Teleskopförderer, bei dem die Höhendifferenz an dem Übergabeende zwischen zwei unmittelbar übereinander angeordneten und damit benachbarten Bandförderern durch eine Überbrückungsvorrichtung ohne Stoßkante überwunden wird, sodass Förderartikel fast jeglicher Größe, Form und auch aus elastischem Material oder auch kleine und kantige Gegenstände störungsfrei oder jedenfalls sehr störungsarm von einem unteren auf einen oberen Bandförderer oder auch umgekehrt transportiert werden können.

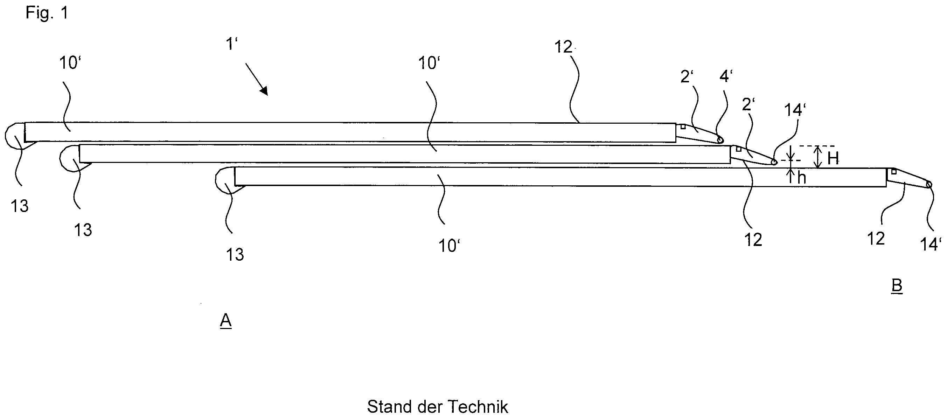

**Fig. 1** zeigt einen Teleskopförderer 1' aus dem Stand der Technik. In diesem Beispiel weist der Teleskopförderer 1' drei Bandförderer 10' auf, die übereinander und überlappend angeordnet sind. Die Länge des Teleskopförderers 1' ist variabel und wird durch Auseinanderziehen und Zusammenschieben der in Längsrichtung in Bezug zueinander beweglichen Bandförderer 10' eingestellt. Hierzu weist jeder Bandförderer 10' einen Rahmen auf, der in **Fig. 1** nicht indiziert ist. In der Regel werden derartige Rahmen durch Profilelemente gebildet, wobei die Anordnung der übereinander positionierten einzelnen Rahmen so gestaltet ist, beispielsweise als eine Profilschiene mit Längsnut, dass der Rahmen eines Bandförderers mit einem Gegenprofilelement, das durch ebenfalls eine Schiene oder z. B. Nutensteine gebildet werden kann, die an einem Unterbaugestell befestigt sind, gleitend auf dem Untergestell und gleitend an dem darüber befindlichen Rahmen angeordnet ist/sind (nicht dargestellt).

Jeder Bandförderer 10' weist ein Umlaufband 12 auf, das um eine Umlenkrolle 13 an einem ersten Ende A des Bandförderers 10' und um eine Umlenkrolle 14' an einem zweiten Ende B umgelenkt wird. Das zweite Ende B jedes Bandförderers 10'wird als Übergabeende bezeichnet, an dem sich eine herkömmliche Überbrückungsvorrichtung 2' befindet, die die zu überwindende Höhendifferenz H zwischen zwei übereinander angeordneten Bandförderern 10' nur teilweise überbrückt. Die Überbrückungsvorrichtung 2' wird hier durch einen abgeknickten Endabschnitt des Umlaufbands 12 gebildet, was durch eine abgesenkte Anordnung und einen verringerten Durchmesser der Umlenkrolle 14' am Übergabeende B erreicht wird. Wie in **Fig. 1** zu sehen ist, bleibt eine Stufe mit einer restlichen Höhendifferenz h zwischen benachbarten (einander nächstgelegenen) Bandförderern 10', die zu überwinden ist. Nachteilig ist dies insbesondere auch, wenn Artikel von einem unteren auf einen oberen Bandförderer 10' transportiert werden sollen. Runde und/oder elastische Artikel laufen Gefahr, durch den beim Übergang von der Überbrückungsvorrichtung auf das nächste Band erhaltenen Impuls zu springen, ggfs. sogar vom Band. Kleinere Artikel können sich verkanten und hängen bleiben.

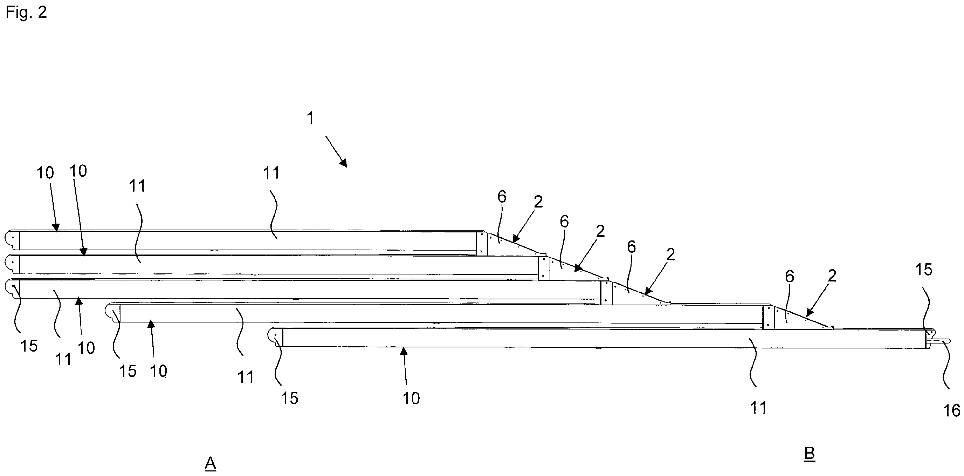

**Figuren 2 bis 10** zeigen erfindungsgemäße Teleskopförderer 1 oder Details davon. Es wird angemerkt, dass die Anzahl der Bandförderer 10 des erfindungsgemäßen Teleskopförderers 1 nicht auf die mit den Figuren beispielhaft dargestellte Anzahl an Bandförderern 10 beschränkt ist. Es ist ohne weiteres ersichtlich, dass ein erfindungsgemäßer Teleskopförderer 1 ausgehend von zwei übereinander angeordneten, teleskopierbaren Bandförderern 10 eine beliebige Anzahl an übereinander angeordneten, teleskopierbaren Bandförderern 10 aufweisen kann, bei denen jeweils zwischen benachbarten Bandförderern 10 eine erfindungsgemäße Überbrückungsvorrichtung 2 angeordnet ist.

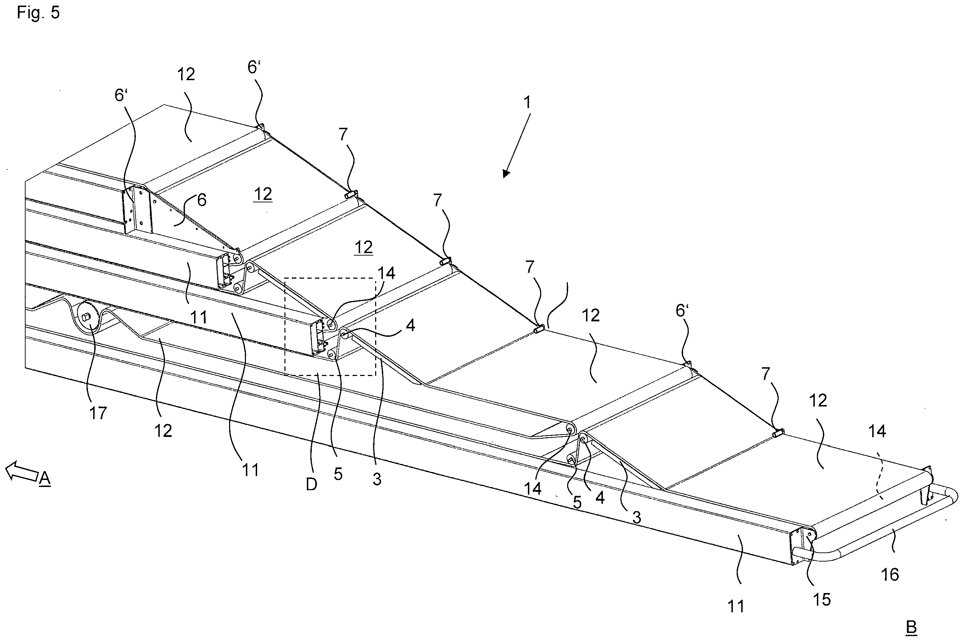

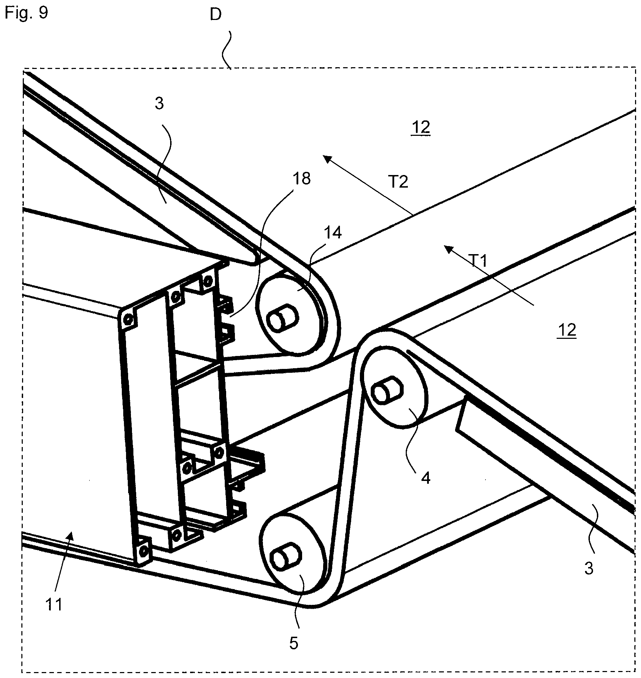

**Fig. 2 bis 4b** zeigen einen erfindungsgemäßen Teleskopförderer 1, **Fig. 5** **und** **9** Details davon. Dort zeigt der Teleskopförderer 1 fünf Bandförderer 10, die überlappend übereinander angeordnet und in Längsrichtung in Bezug zueinander relativ bewegbar sind. In der beispielhaften Darstellung sind die beiden unteren Bandförderer 10 teilweise herausgefahren dargestellt, was lediglich eine mögliche Benutzungsanordnung ist.

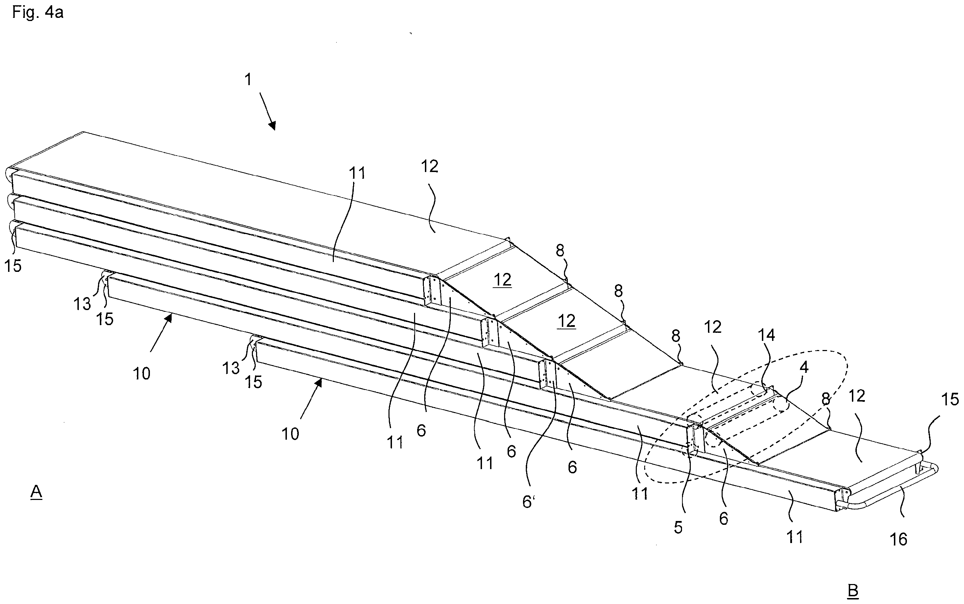

Jeder Bandförderer 10 hat einen Rahmen 11, der an sich wie im Stand der Technik gestaltet sein kann, (und kann auf einen Tisch montiert sein, ebenfalls nicht dargestellt) und ein Umlaufband 12, das an endständigen Umlenkrollen 13,14 umgelenkt wird. In den Figuren zeigt der Buchstabe "A" jeweils die Seite der ersten Enden jedes Bandförderers 10 mit der ersten Umlenkrolle 13, und Buchstabe "B" verdeutlicht die Seite der zweiten Enden bzw. Übergabeenden jedes Bandförderers 10 mit der zweiten Umlenkrolle 14. Die Umlenkrollen 13,14 sind in Rollenhalterungen 15 gelagert. Wegen des Umlaufbands 12 sind nicht alle Umlenkrollen13,14 zu sehen; in **Fig. 4a** sind an einer Stelle, die durch die oval strichelierte Detailangabe D herausgehoben ist, beispielhaft für alle entsprechenden Positionen Umlenkrollen 14, 4 und eine Niederhalterrolle 5 stricheliert angegeben - diese bilden das wesentliche Element der Erfindung, die Überbrückungsvorrichtung 2, mit.

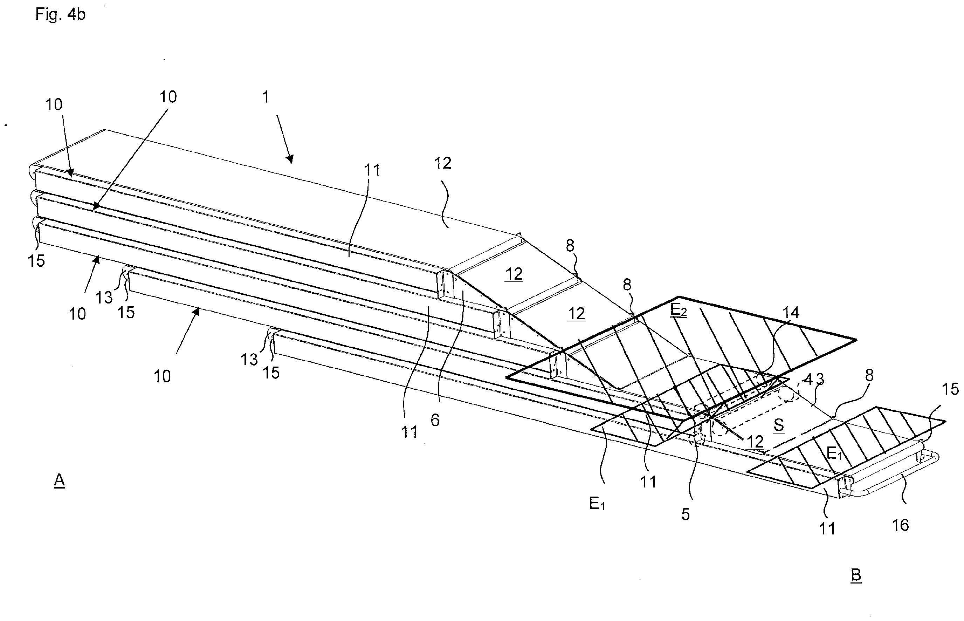

**Fig 4b** hingegen zeigt beispielhaft den Fördermechanismus von einem unteren Bandförderer 10, auf einen darüber liegenden Bandförderer 10: Waren (nicht gezeigt) werden auf dem Umlaufband 12 des unteren Bandförderers 10 gefördert und bewegen sich auf einer Ebene E1. Entlang der Rampe 3 passieren die Waren eine Steigung S und werden übergeben auf das Folgeumlaufband 12 des darüber liegenden Bandförderers 10: Sie laufen nun weiter auf der nächsten Ebene E2. Üblicherweise sind beide Ebenen E1, E2 bodenparallel angeordnet. Der Bandförderer 10, der in Ebene E1 liegt, wird nach passieren der Rampe 3 über die Umlenkrolle 4 nach unten umgelenkt und unterläuft die Niederhalterrolle 5, um in Ebene E1 fortgeführt zu werden. So verhält es sich für alle Umlaufbänder 12, die über eine Überbrückungsvorrichtung 2 geführt werden.

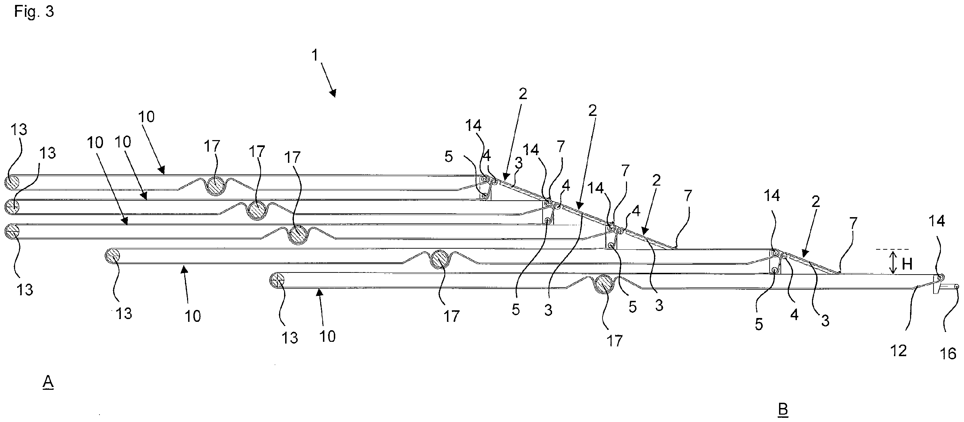

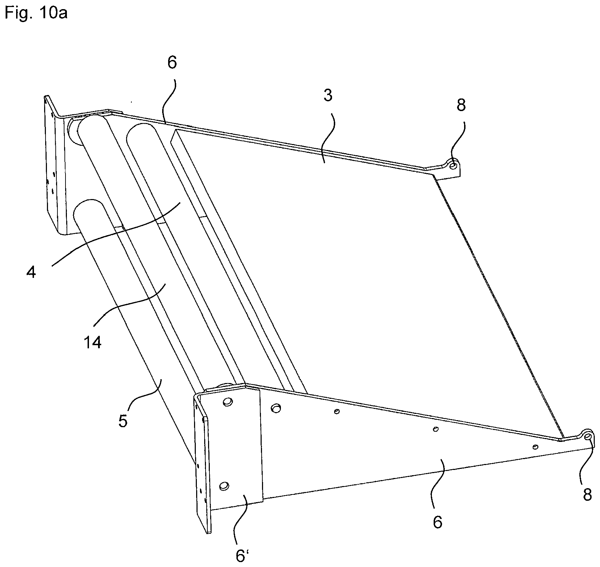

Diese (einschließlich einer Umlenkrolle 14, die mit der Überbrückungsvorrichtung 2 zusammenwirkt) ist in einer Ausführungsform auch einzeln im Detail in **Fig. 10a** dargestellt. Sie ermöglicht einen stoßkantenfreien Übergang zwischen zwei benachbarten, übereinander angeordneten Bandförderern 10 eines Teleskopförderers 1. Jeweils eine der erfindungsgemäßen Überbrückungsvorrichtungen 2 ist, siehe **bspw.** **Fig. 2** **und** **3****,** zwischen zwei benachbarten, übereinander angeordneten Bandförderern 10 angeordnet. Sie überbrückt die an dem Übergabeende zu überwindende Höhendifferenz H (in **Fig. 3** eingezeichnet) zwischen den zwei übereinander angeordneten Bandförderern 10 komplett und mit stetigem Anstieg bzw. Gefälle, ohne dass eine Stoßkante gebildet wird. Wie **Fig. 3** zeigt, ist die verbleibende Lücke minimalisiert, die zwischen den beiden Bandförderern, zwischen denen eine Übergabe stattfindet, noch vorliegt. So können auch kleine, runde und/oder elastische Artikel störungsfrei transportiert werden. Gerade für runde und/oder elastische Artikel wie etwa Reifen für PKW oder LKW wird durch die erfindungsgemäße Überbrückungsvorrichtung 2 auch der Transport von einem oberen auf einen unteren Bandförderer 10 verbessert: Durch das stetige Gefälle der erfindungsgemäßen Überbrückungsvorrichtung 2 wird ein "freier Fall" über eine Stoßkante vermieden, sodass die Artikel beim Übergang von einem oberen auf einen unteren Bandförderer kontrollierter gefördert werden und nicht wegspringen oder -rollen.

In **Fig. 3** **und** **5** sind zudem Antriebsrollen 17 zu sehen. Jeder Bandförderer 10 weist in dem dargestellten Beispiel im mittleren Bereich eine Antriebsrolle 17 auf. Zur Vereinfachung der Darstellung sind hier die hierfür erforderlichen Umlenkrollen weggelassen, gehen aber aus der dargestellten Führung des Umlaufbands 12 um die Antriebsrolle 17 hervor, da jede Richtungsänderung des Bands 12 ein entsprechendes Umlenkmittel erfordert.

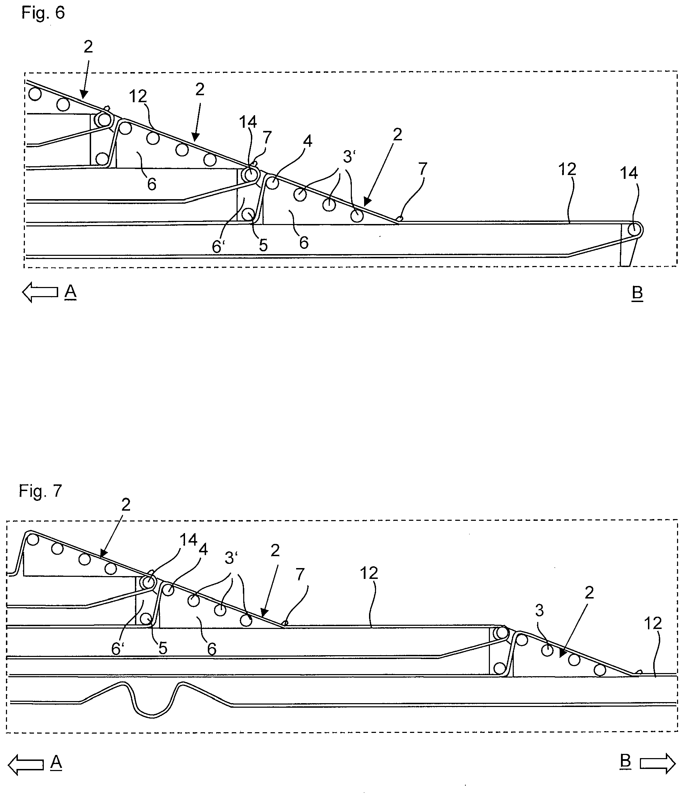

Die erfindungsgemäße Überbrückungsvorrichtung 2 weist eine Rampe 3,3' auf, die, wie in **Fig. 2 bis 5****,** **9 und 10****,** durch eine ansteigend angeordnete Platte 3 oder, wie in **Fig. 6 und 7****,** durch mehrere stetig ansteigend angeordnete Querrollen 3' gebildet sein kann. Auch hier versteht sich von selbst, dass, anders als dargestellt, die Platte 3, die die schiefe Ebene der Rampe bildet, auch aus mehreren Teilstücken zusammengesetzt sein kann, die gegebenenfalls auch voneinander beabstandet angeordnet sein können, solange sie in einer gemeinsamen Ebene liegen. Entsprechend ist die alternative Ausführung der Rampe 3' durch mehrere ansteigend angeordnete Querrollen 3' nicht auf die dargestellte Anzahl von drei beschränkt. Hier können auch mehr oder weniger Querrollen 3' zur Bildung der schiefen Ebene der Rampe eingesetzt werden, abhängig auch von der zu überwindenden Höhendifferenz H.

Am oberen Ende der Rampe 3,3' ist eine erste Umlenkrolle 4 so angeordnet, dass eine Tangentialebene dieser Umlenkrolle 4 mit der durch die Rampe 3,3' bereitgestellten schiefen Ebene fluchtet. Weiter ist eine zweite Umlenkrolle 14 vorgesehen, die auf der von der Rampe 3,3' abgewandten Seite der ersten Umlenkrolle 4 benachbart, aber etwas oberhalb dazu angeordnet ist, sodass auch diese zweite Umlenkrolle 14 eine Tangentialebene aufweist, die mit der durch die Rampe 3,3' bereitgestellten schiefen Ebene fluchtet.

Unterhalb der beiden Umlenkrollen 4,14 ist eine Niederhalterrolle 5 angeordnet, sodass das Umlaufband 12 des jeweils unteren Bandförderers 10 über die Rampe 3,3' geführt, um die erste Umlenkrolle 4 umgelenkt und unter der Niederhalterrolle 5 durchgeführt wird, während das Umlaufband 12 des benachbart darüber angeordneten Bandförderers 10 um die zweite Umlenkrolle 14 der Überbrückungsvorrichtung 2 umgelenkt wird, die damit die Umlenkrolle 14 am Übergabeende des jeweils oberen Bandförderers 10 bildet. Mit dem über die Rampe 3,3' und die Umlenkrolle 4 geführten Umlaufband 12 des unteren Bandförderers 10 wird die Höhendifferenz H zum benachbarten, oberen Bandförderer 10, dessen Umlaufband 12 von der zweiten Umlenkrolle 14 der Überbrückungsvorrichtung 2 umgelenkt wird, durch einen stetigen Anstieg bzw. Gefälle ohne Stoßkanten überwunden; siehe auch hierzu **Fig. 4b****,** in der der Sachverhalt durch die Ebenen verdeutlicht wird.

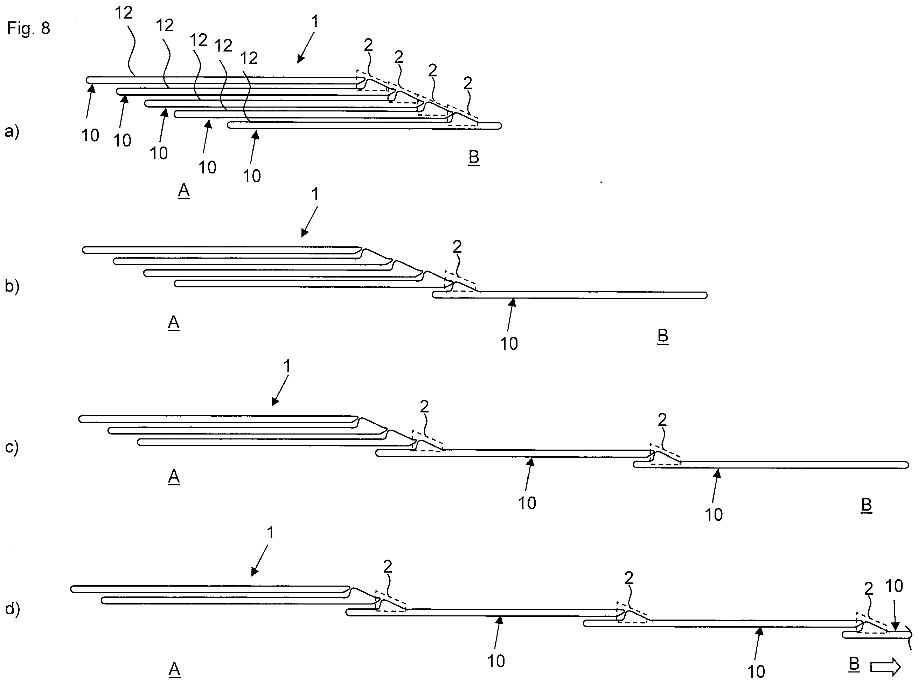

Die Überbrückungsvorrichtung 2 ist mit der zweiten Umlenkrolle 14 mit dem jeweils oberen Bandförderer 10 verbunden, während sie in Bezug auf den Rahmen 11 des jeweils unteren Bandförderers 10 längsbeweglich ist, sodass sie beim Teleskopieren der Bandförderer 10 am jeweiligen Übergabeende B des jeweils oberen Bandförderers 10 verbleibt. Dies ist in der schematisch dargestellten Abfolge a) bis d) in **Fig. 8** gezeigt, in der der Übersichtlichkeit wegen nur das Umlaufband 12 dargestellt ist. Der Bereich der Übergabevorrichtung 2 ist durch Strichelierung kenntlich gemacht. Der Blockpfeil in **Fig. 8d****,** dort neben dem Buchstaben "B", soll wie in **Fig. 5 bis 7** lediglich andeuten, dass das entsprechende Bandfördererende A, B außerhalb des Darstellungsbereichs liegt.

Das Teleskopieren des Teleskopförderers 1 kann händisch erfolgen. Hierzu ist in dem dargestellten Beispiel an dem untersten Bandförderer 10 am zweiten Ende B ein Griff vorgesehen, an dem, wie in **Fig. 8** skizziert, zunächst der unterste Bandförderer 10 herausgezogen werden kann. Ist der unterste Bandförderer 10 komplett ausgefahren, wird bei weiterem Ziehen am Griff 16 der nächstobere Bandförderer 10 zwangsgekoppelt ausgezogen, usw. Beim Zusammenschieben wird dann entsprechend zunächst der unterste Bandförderer 10 komplett eingeschoben, ehe der nächstobere Bandförderer 10 eingeschoben wird. Je nach Art der Kopplung der teleskopierbaren Bandförderer 10 kann der Teleskopförderer 1 auch so ausgebildet sein, dass mit dem Ausfahren des untersten Bandförderers 10 die oberen Bandförderer 10 ähnlich einem mehrfachen Seilzugmechanismus sukzessive ebenfalls mit ausgefahren werden, bevor der unterste Bandförderer 10 komplett ausgefahren ist.

Ferner ist auszuführen, dass es weitere Ausgestaltungen des erfindungsgemäßen Teleskopförderers gibt, bei denen aber nicht der unterste Tisch bzw. der unterste Bandförderer, sondern durchaus auch ein anderer, mittlerer oder sogar der oberste Bandförderer zuerst ausgezogen wird, etwa über entsprechende Füße. Dies ist dem Fachmann aber bekannt und ändert nichts an der technischen Lehre, die durch die Überbrückungsvorrichtung gebildet wird.

Selbstverständlich kann ein erfindungsgemäßer Teleskopförderer 1 auch automatisiert ein- und ausgefahren werden, wenn die teleskopierbaren Bandförderer 10 mit entsprechenden hydraulischen, pneumatischen, elektrischen und/oder mechanischen Antriebs- und Übersetzungselementen und einer entsprechenden Steuerung ausgestattet/verbunden sind.

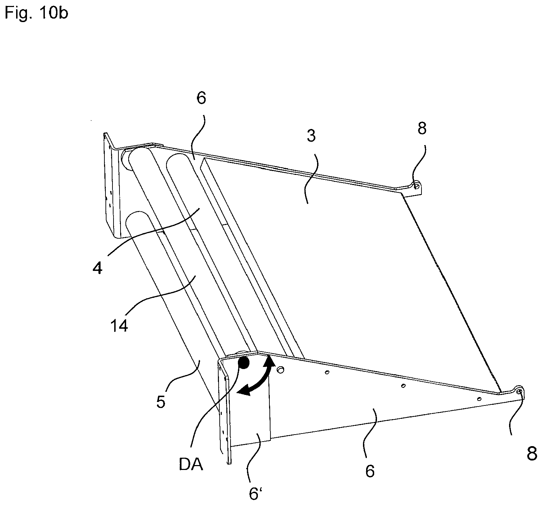

Die Überbrückungsvorrichtung 2 wird, siehe **Fig. 10a** **und** **10b****,** seitlich durch jeweils ein Rahmenelement 6 begrenzt, zwischen denen die Rampe 3,3', die Umlenkrollen 4, 14 und die Niederhalterrolle 5 befestigt sind. Das Rahmenelement 6 wird hier durch ein Winkelstück 6' ergänzt, das auch zur Befestigung am Rahmen 11 des jeweils oberen Bandförderers 10 dient, wie z. B. in **Fig. 4** **und** **5** zu sehen ist. Das Winkelstück 6' überlappt einen Teil des Rahmenelements 6, das am oberen Ende zur Aufnahme der Umlenkrollen 4,14 laschenartig ausgerundet ist, wie in **Fig. 10** zu sehen ist, sodass das Winkelstück 6' zusammen mit dem Rahmenelement 6 die zweite Umlenkrolle 14 haltert. Die Niederhalterrolle 5 wird nur von dem ergänzenden Winkelstück 6' gehalten.

Wie außerdem die Ausbildung der Vorrichtung in **Fig. 10b** andeutet, kann vorgesehen sein, dass die beiden seitlichen Rahmenelemente 6 drehgelenkig mit dem Winkelstück 6' verbunden sind, so dass die Rampe 3 beweglich ist und Bodenunebenheiten ausgleichen kann - die Umlenkrolle14 bildet dann die Achse (Drehachse DA), um die die Rampe 3 geschwenkt werden kann, siehe Blockpfeile.

Weiter weist das Rahmenelement 6 am unteren Ende der Rampe 3 eine Aufnahme 8 für einen Niederhalter 7 auf (vgl. z. B. **Fig. 5**), der dazu dient, das über die Rampe 3 geführte Umlaufband 12 an dessen Rand niederzuhalten, damit das Band 12 an der Rampe 3 anliegt. Der Niederhalter 7 erstreckt sich vorzugsweise nicht quer über das Umlaufband 12, da er ansonsten ebenfalls eine Stoßkante bilden würde. Anders als dargestellt kann ggf. der Niederhalter auch einstückig mit dem Rahmenelement gebildet sein, sodass dort auf die Ausbildung einer Aufnahmevorrichtung dafür verzichtet werden kann.

**Fig. 9** zeigt ein Detail D des Übergangs zwischen zwei benachbarten Bandförderern 10, wie er durch die erfindungsgemäße Überbrückungsvorrichtung 2 mit der Rampe 3, den Umlenkrollen 4, 14 und der Niederhalterrolle 5 mit der beschriebenen Führung der Umlaufbänder 12 bereitgestellt wird. Im zusammengeschobenen Zustand kommen hier die Überbrückungsvorrichtungen 2 benachbarter Bandförderer 10 direkt angrenzend aneinander zu liegen, wobei die Rampen 3 und damit die Umlaufbänder 12 benachbarter Bandförderer 10 miteinander mit der stetigen Steigung fluchten. Weiter ist in **Fig. 9** der Rahmen 11 zu sehen, an dessen Stirnfläche die Überbrückungsvorrichtung 2 mit dem hier nicht dargestellten Winkelstück 6' befestigt wird. Der Rahmen 11 besteht hier aus mehreren Profilen mit Profilnuten, z. B. Profilnut 18, z. B. zur Lagerung der Antriebsrolle 17.

### BEZUGSZEICHENLISTE

- 1: Teleskopförderer
- 2: Überbrückungsvorrichtung
- 3,3': Rampe aus Platte,
- 3': Rampe aus Rollen
- 4: erste endständige Umlenkrolle
- 5: Niederhalterrolle
- 6, 6': Rahmenelement, Winkelstück
- 7: Niederhalter
- 8: Niederhalteraufnahme
- 10: Bandförderer
- 11: Rahmen
- 12: Umlaufband
- 13: erste Umlenkrolle
- 14: zweite endständige Umlenkrolle
- 15: Rollenhalterung
- 16: Griff
- 17: Antriebsrolle
- 18: Profilnut

- A,B: erstes Ende, zweites bzw. Übergabeende
- D: Detail
- DA: Drehachse
- E1,E2: Ebenen
- H,h: zu überwindende Höhendifferenz, verbleibende Stoßkantenhöhe
- S: Steigung

- 1': Teleskopförderer, Stand der Technik
- 2': Überbrückungsvorrichtung, Stand der Technik
- 4': erste endständige Umlenkrolle, Stand der Technik
- 10': Bandförderer, Stand der Technik
- 14': endständige Umlenkrolle

## Patentansprüche

1. Teleskopförderer (1) mit zumindest zwei Bandförderern (10), die übereinander angeordnet und in Längsrichtung in Bezug zueinander relativ bewegbar sind,
wobei jeder Bandförderer (10)
- einen Rahmen (11),
- ein Umlaufband (12),
- eine erste endständige Umlenkrolle (13) an einem ersten Ende (A) und eine
- zweite endständige Umlenkrolle (14) an einem zweiten Ende (B) des Bandförderers (10) aufweist, wobei das zweite Ende (B) ein Übergabeende des Bandförderers (10) ist,
und wobei jeweils zwischen zwei übereinander liegenden und benachbarten Bandförderern (10) eine Überbrückungsvorrichtung (2',2) vorgesehen ist, die die an dem Übergabeende zu überwindende Höhendifferenz (H) zwischen den zwei übereinander angeordneten Bandförderern (10) zumindest teilweise überbrückt,
wobei die Überbrückungsvorrichtung (2)
- eine Rampe (3,3') mit einer Steigung (S) und
- eine erste Umlenkrolle (4), die an dem höher liegenden Ende der Rampe (3,3') angeordnet ist, aufweist,
**dadurch gekennzeichnet, dass**
die Überbrückungsvorrichtung (2)
- eine erste Niederhaltevorrichtung (5) aufweist, die unterhalb der ersten Umlenkrolle (4) angeordnet ist, und
- eine zweite Niederhaltevorrichtung (7) am Fuß der Rampe (3,3') aufweist,
wobei das Umlaufband (12) des jeweils unteren Bandförderers (10) von einer Förderebene (E1) unter der zweiten Niederhaltevorrichtung (7) über die Rampe (3,3') mit der Steigung (S) geführt und von dort über die erste Umlenkrolle (4) umgelenkt und unter der ersten Niederhaltevorrichtung (5) zurück auf die Förderebene (E1) geführt wird,
und wobei die Steigung (S) der Rampe (3,3') sich stufenlos tangential entlang dem über seine zweite endständige Umlenkrolle (14) geführten Umlaufbandes (12) des darüber liegenden Bandförderers (10) fortsetzt.

2. Teleskopförderer (1) nach Anspruch 1,
**dadurch gekennzeichnet, dass**
- die erste Niederhaltevorrichtung (5) eine Niederhalterolle (5), ein Niederhaltestift oder Niederhaltestab und/oder
- die zweite Niederhaltevorrichtung (7) ein Niederhaltestift oder Niederhaltestab oder eine Leiste ist.

3. Teleskopförderer (1) nach Anspruch 1 oder 2,
**dadurch gekennzeichnet, dass**
die Überbrückungsvorrichtung (2) eines unteren Bandförderers (10) und die zweite endständige Umlenkrolle (14) des darüber liegenden benachbarten oberen Bandförderers (10) an dem Rahmen (11) dieses jeweils oberen Bandförderers (10) befestigt und in Bezug auf den Rahmen (11) des jeweils unteren Bandförderers (10) längsbeweglich ist.

4. Teleskopförderer (1) nach Anspruch 3,
**dadurch gekennzeichnet, dass**
die Befestigung der Überbrückungsvorrichtung (2) des unteren Bandförderers (10) und der zweiten endständigen Umlenkrolle (14) des darüber liegenden benachbarten oberen Bandförderers (10) über zwei seitliche Rahmenelemente (6), bevorzugt über jeweils ein mit jedem seitlichen Rahmenelement (6) verbundenes Winkelelement (6'), gebildet wird.

5. Teleskopförderer (1) nach zumindest einem der Ansprüche 1 bis 4,
**dadurch gekennzeichnet, dass**
die Rampe (3,3') durch eine Platte (3) oder mehrere stetig ansteigend angeordnete Querrollen (3') gebildet wird.

## Claims

1. Telescopic conveyor (1) with at least two belt conveyors (10) arranged one above the other and movable relative to one another in the longitudinal direction, each belt conveyor (10) having
- a frame (11),
- a circulating belt (12),
- a first terminal deflection pulley (13) at a first end (A) and a
- second terminal deflection pulley (14) at a second end (B) of the belt conveyor (10), said second end (B) being a transfer end of the belt conveyor (10),
and a bridging device (2', 2) being provided between each two adjacent belt conveyors (10) positioned one above the other and which at least partially bridges the height difference (H) to be overcome between the two belt conveyors (10) arranged one above the other at the transfer end,
the bridging device (2) having
- a ramp (3, 3') with a slope (S) and
- a first deflection pulley (4) arranged at the higher end of the ramp (3, 3'), **characterized in that**
- the bridging device (2) has a first hold-down device (5) arranged below the first deflection pulley (4), and
- has a second hold-down device (7) at the foot of the ramp (3, 3'),
the circulating belt (12) of each lower belt conveyor (10) passing from one conveying level (E1) below the second hold-down device (7) over the ramp (3, 3') with the slope (S) and from there being deflected by the first deflection pulley (4) and passing underneath the first hold-down device (5) back to the conveying level (E1),
and the slope (S) of the ramp (3, 3') continuing steplessly and tangentially along the circulating belt (12), passing over its second terminal deflection pulley (14), of the belt conveyor (10) positioned above it.

2. Telescopic conveyor (1) according to claim 1,
**characterized in that**
- the first hold-down device (5) is a hold-down pulley (5), a hold-down pin or a hold-down rod and/or
- the second hold-down device (7) is a hold-down pin or a hold-down rod or a bar.

3. Telescopic conveyor (1) according to claim 1 or 2,
**characterized in that**
the bridging device (2) of a lower belt conveyor (10) and the second terminal deflection pulley (14) of the adjacent upper belt conveyor (10) positioned above it are fastened in each case to the frame (11) of said upper belt conveyor (10) and is longitudinally movable relative to the frame (11) of each lower belt conveyor (10).

4. Telescopic conveyor (1) according to claim 3,
**characterized in that**
the fastening of the bridging device (2) of the lower belt conveyor (10) and of the second terminal deflection pulley (14) of the adjacent upper belt conveyor (10) positioned above it is formed by two lateral frame elements (6), preferably by an angle element (6') connected to each lateral frame element (6).

5. Telescopic conveyor (1) according to at least one of claims 1 to 4,
**characterized in that**
the ramp (3, 3') is formed by a plate (3) or by several transverse pulleys (3') arranged continually rising.

## Revendications

1. Convoyeur télescopique (1) avec au moins deux bandes transporteuses (10) superposées et déplaçables l'une par rapport à l'autre dans le sens longitudinal, sachant que chaque bande transporteuse (10) présente
- un cadre (11),
- une bande circulante (12),
- un premier galet de renvoi (13) en position terminale à une première extrémité (A) et
- un second galet de renvoi (14) en position terminale sur une seconde extrémité (B) de la bande transporteuse (10), sachant que la seconde extrémité (B) est une extrémité de transfert de la bande transporteuse (10),
et sachant qu'est prévu respectivement entre deux bandes transporteuses (10) superposées et voisines un dispositif de passage de dénivelé (2', 2) qui comble au moins partiellement la différence de hauteur à franchir à l'extrémité de transfert (H) entre les deux bandes transporteuses superposées (10),
sachant que le dispositif de passage de dénivelé (2) présente
- une rampe (3, 3') avec une pente (S) et
- un premier galet de renvoi (4) qui est disposé à l'extrémité la plus élevée de la rampe (3, 3'),
**caractérisé en ce que**
- le dispositif de passage de dénivelé (2) présente un premier dispositif de retenue (5) disposé en dessous du premier galet de renvoi (4), et
- un second dispositif de retenue (7) au pied de la rampe (3, 3'),
sachant que la bande circulante (12) de la bande transporteuse inférieure respective (10) est guidée d'un plan de convoyage (E1) situé en dessous du second dispositif de retenue (7), sur la rampe (3, 3') avec la pente (S), d'où elle est renvoyée via le premier galet de renvoi (4), puis retourne sur le plan de convoyage (E1) sous le premier dispositif de retenue (5),
et sachant que la pente (S) de la rampe (3, 3') se poursuit progressivement tangentiellement le long de la bande circulante (12) de la bande transporteuse (10) située au-dessus, guidée via son second galet de renvoi (14) en position terminale.

2. Convoyeur télescopique (1) selon la revendication 1,
**caractérisé en ce que**
- le premier dispositif de retenue (5) est un contre-galet (5), une goupille de retenue ou une barre de retenue et/ou
- que le second dispositif de retenue (7) est une goupille de retenue ou une barre de retenue ou une baguette.

3. Convoyeur télescopique (1) selon la revendication 1 ou 2,
**caractérisé en ce que**
le dispositif de passage de dénivelé (2) d'une bande transporteuse inférieure (10) et le second galet de renvoi en position terminale (14) de la bande transporteuse supérieure (10) voisine, située au-dessus sont fixés au cadre (11) de cette bande transporteuse supérieure (10) respective et que ledit dispositif de passage de dénivelé est déplaçable longitudinalement par rapport au cadre (11) de la bande transporteuse inférieure (10) respective.

4. Convoyeur télescopique (1) selon la revendication 3,
**caractérisé en ce que**
la fixation du dispositif de passage de dénivelé (2) de la bande transporteuse inférieure (10) et du second galet de renvoi (14) en position terminale, de la bande transporteuse supérieure voisine (10) située au-dessus est conçue au moyen de deux éléments de cadre (6) latéraux, de préférence au moyen respectivement d'un élément en équerre (6') relié à chaque élément de cadre (6) latéral.

5. Convoyeur télescopique (1) selon au moins une des revendications 1 à 4,
**caractérisé en ce que**
la rampe (3,3') est conçue au moyen d'une plaque (3) ou de plusieurs rouleaux transversaux disposés de manière à former une ascension continue.
